# EUROPÄISCHE PATENTSCHRIFT

(11) **EP 3 207 231 B1**
(45) Veröffentlichungstag und Bekanntmachung des Hinweises auf die Patenterteilung: **28.11.2018**
(21) Anmeldenummer: 15760420.8
(22) Anmeldetag: 27.08.2015
(51) Int. Cl.: F02B 37/10, F02B 39/10

(54) **AUFLADEEINRICHTUNG FÜR EINEN VERBRENNUNGSMOTOR UND BETRIEBSVERFAHREN FÜR DIE AUFLADEEINRICHTUNG**
SUPERCHARGER DEVICE FOR AN INTERNAL COMBUSTION ENGINE AND OPERATING METHOD FOR SUPERCHARGER DEVICE
DISPOSITIF DE SURALIMENTATION POUR UN MOTEUR À COMBUSTION INTERNE ET PROCÉDÉ DE FONCTIONNEMENT DE DISPOSITIF DE SURALIMENTATION

(30) Priorität: 15.10.2014 DE 102014220931
(43) Veröffentlichungstag der Anmeldung: 23.08.2017
(73) Patentinhaber: Continental Automotive GmbH, 30165 Hannover (DE)
(72) Erfinder: ZHANG, Hong, 93105 Tegernheim (DE); BENDER, Werner, 67551 Worms (DE)
(86) Internationale Anmeldenummer: PCT/EP2015/069602
(87) Internationale Veröffentlichungsnummer: WO 2016/058739

(56) Entgegenhaltungen:
- EP-A1- 1 391 595
- EP-A2- 1 749 990
- JP-A- H02 112 620
- US-A1- 2006 064 981

## Beschreibung

Die Erfindung betrifft eine Aufladeeinrichtung für einen Verbrennungsmotor mit einem Abgasturbolader und ein Betriebsverfahren für diese Aufladeeinrichtung.
Abgasturbolader werden vermehrt zur Leistungssteigerung bei Verbrennungsmotoren, insbesondere in Kraftfahrzeugen eingesetzt. Dies geschieht immer häufiger mit dem Ziel den Verbrennungsmotor bei gleicher oder gar gesteigerter Leistung in Baugröße und Gewicht zu reduzieren und gleichzeitig den Verbrauch und somit den CO₂-Ausstoß, im Hinblick auf immer strenger werdende gesetzliche Vorgaben diesbezüglich, zu verringern. Das Wirkprinzip besteht darin, die im Abgasstrom enthaltene Energie zu nutzen um den Druck im Ansaugtrakt des Verbrennungsmotors zu erhöhen und so eine bessere Befüllung des Brennraumes mit Luft-Sauerstoff zu bewirken und somit mehr Treibstoff, Benzin oder Diesel, pro Verbrennungsvorgang umsetzen zu können, also die Leistung des Verbrennungsmotors zu erhöhen.
Ein Abgasturbolader weist dazu eine im Abgasstrang des Verbrennungsmotors angeordnete Turbine mit einem durch den Abgasstrom angetriebenen Turbinenlaufrad und einen im Ansaugtrakt angeordneten Verdichter mit einem den Druck aufbauenden Verdichterlaufrad auf. Turbinenlaufrad und Verdichterlaufrad sind drehfest an den gegenüberliegenden Enden einer Rotorwelle befestigt, die in einer zwischen Turbine und Verdichter angeordneten Lagereinheit drehgelagert ist. Somit wird mit Hilfe des Abgasmassenstroms das Turbinenrad und über die Rotorwelle wiederum das Verdichterrad angetrieben und die Abgasenergie so zum Druckaufbau im Ansaugtrakt genutzt. Ein Beispiel für eine Aufladeeinrichtung wird in EP-1391595 gezeigt. Turbinen und Verdichter sind Strömungsmaschinen und haben aufgrund der physikalischen Gesetzmäßigkeiten einen jeweils von Baugröße und Bauart abhängigen optimalen Betriebsbereich der durch den Massedurchsatz, das Druckverhältnis und die Drehzahl des jeweiligen Laufrades gekennzeichnet ist.

Im Gegensatz dazu ist der Betrieb eines Verbrennungsmotors in einem Kraftfahrzeug von dynamischen Änderungen der Last und des Betriebsbereiches gekennzeichnet.

Um nun den Betriebsbereich des Abgasturboladers an sich ändernde Betriebsbereiche des Verbrennungsmotors anpassen zu können und so ein gewünschtes Ansprechverhalten möglichst ohne spürbare Verzögerungen (Turboloch) zu gewährleisten, werden Abgasturbolader mit zusätzlichen Funktionen, wie zum Beispiel sogenannten variablen Turbinengeometrien (VTG) oder Wastegate-Einrichtungen (WG) auf der Abgasseite und Schubumluft- oder Abblas-Einrichtungen auf der Zuluftseite ausgestattet. Diese dienen dazu das träge Verhalten und somit das verzögerte Ansprechverhalten des Turboladers zu minimieren und schädliche Betriebszustände, wie zum Beispiel das sogenannte Verdichterpumpen zu vermeiden.

Auch ist es bekannt Kombinationen von mehreren Turboladern in paralleler oder sequenzieller Anordnung oder zusätzliche mechanisch oder elektromotorisch betriebene Verdichter, sogenannte Kompressoren oder Supercharger, einzusetzen um den unterschiedlichen Betriebsbedingungen des Verbrennungsmotors gerecht zu werden, die Leistung in jedem Drehzahlbereich und insbesondere bei Beschleunigungsvorgängen effizient zu steigern und insbesondere das gefürchtete Turboloch zu vermeiden.

Eine solche Aufladeeinrichtung, die einen herkömmlichen Abgasturbolader und einen im Frischluftstrom in Reihe oder parallel zu dem Turbolader-Verdichter angeordneten Zusatzverdichter mit einem vom Abgasstrom unabhängigen, beispielsweise elektromotorischen Antrieb aufweist, ist zum Beispiel in der DE 100 23 022 A1 offenbart.

Andererseits besteht in Betriebsphasen, in denen die Leistung des Verbrennungsmotors schnell heruntergefahren wird, ebenfalls durch die Trägheit des Turboladers bedingt, ein Überangebot an Verdichterleistung, was zum Verdichterpumpen führen kann. In solchen Betriebszuständen wird zum Beispiel über eine Wastegate-Einrichtung Abgas an der Turbine des Turboladers vorbei in den Abgastrakt geleitet und bereits verdichtete Frischluft wird nach dem Verdichter abgeblasen oder über eine Schubumluft-Einrichtung entspannt und in den Ansaugbereich zurückgeführt. Die Anordnung und die Funktionsweise eines solchen Schubumluftventils ist beispielsweise aus den Dokumenten DE 28 23 067 C2 und DE 19712850A1 bekannt.

Auf diese Weise wird die zur Verfügung stehende Energie ungenutzt in die Umgebung entlassen, was sich negativ auf die Gesamtenergiebilanz und somit den Wirkungsgrad des Verbrennungsmotors auswirkt.

Der vorliegenden Erfindung liegt daher die Aufgabe zugrunde, eine Aufladeeinrichtung und ein Betriebsverfahren dafür für einen Verbrennungsmotor anzugeben, die gleichermaßen dazu geeignet sind den Ladedruckaufbau durch den Abgasturbolader in Beschleunigungs- oder Spitzenlastphasen des Verbrennungsmotors zu unterstützen als auch die überschüssige Energie im Aufladesystem in Abbrems- oder Niederlastphasen des Verbrennungsmotors zu nutzen beziehungsweise im Gesamtsystem Kraftfahrzeug nutzbar zu machen und so den Wirkungsgrad des Verbrennungsmotors zu steigern.

Diese Aufgabe wird durch eine mit den Merkmalen gemäß Patentanspruch 1 sowie durch ein Betriebsverfahren für diese Aufladeeinrichtung mit den Merkmalen gemäß Patentanspruch 9 gelöst.
Vorteilhafte Aus- und Weiterbildungen, welche einzeln oder, sofern es sich nicht um sich gegenseitig ausschließende Alternativen handelt, in Kombination miteinander eingesetzt werden können, sind Gegenstand der abhängigen Ansprüche.

Die erfindungsgemäße Aufladeeinrichtung für einen Verbrennungsmotor, der einen Ansaugtrakt und einem Abgastrakt aufweist, weist einen Abgasturbolader mit einer Abgasturbine, die im Abgastrakt des Verbrennungsmotors angeordnet ist, und einen Frischluftverdichter mit einer Niederdruckseite und einer Hochdruckseite, der im Ansaugtrakt des Verbrennungsmotors angeordnet ist, auf.

Der Frischluftverdichter ist auf seiner Niederdruckseite an eine Frischluftzuführleitung angeschlossen und ist auf seiner Hochdruckseite über eine Ladeluftzuleitung mit einem Ladeluftkrümmer des Verbrennungsmotors verbunden. Die Aufladeeinrichtung zeichnet sich durch die zusätzliche Anordnung eines Rekuperationslader aus, der eine Verdichter-Turbine mit einer Hochdruckseite und einer Niederdruckseite und einen damit gekoppelten elektromechanischen Motor-Generator aufweist. Dabei ist die Hochdruckseite der Verdichter-Turbine mittels einer Ventilanordnung einerseits an die Frischluftzuführleitung und andererseits an die Ladeluftzuleitung des Verbrennungsmotors anschließbar, wobei über die Niederdruckseite der Verdichter-Turbine ein Frischluftmassenstrom ansaugbar oder ein Ladeluftmassenstrom abblasbar ist. Als Ladeluftmassenstrom wird dabei der auf einen erhöhten Druck gepumpte Frischluftmassenstrom in Strömungsrichtung stromabwärts des Frischluftverdichters des Abgasturboladers, also auf dessen Hochdruckseite bezeichnet.

Mittels der Ventilanordnung und dem Motor-Generator ist der Rekuperationslader einerseits, vom Motor-Generator angetrieben, als Verdichter zur Druckerhöhung in der Frischluftzuführleitung und andererseits, vom Ladeluftstrom angetrieben, als Turbine zur Energierückgewinnung mittels des Motor-Generators oder auch neutral betreibbar.

Unter dem Begriff Rekuperationslader ist dabei eine Vorrichtung zu verstehen, die eine Schaufelradturbine mit angeschlossenem Generator und einen Schaufelradverdichter mit angeschlossenem Elektromotor in einer Vorrichtung vereint. So ist eine Schaufelradturbine und ein Schaufelradverdichter in einer Einheit zu einer oben sogenannten und auch im Weiteren so bezeichneten Verdichter-Turbine zusammengefasst.

Ebenso ist der Elektromotor und der Generator in einer Einheit zu einem oben sogenannten und auch im Weiteren so bezeichneten Motor-Generator zusammengefasst. Die Verdichter-Turbine und der Motor-Generator sind direkt oder über ein zwischengeschaltetes Getriebe miteinander gekoppelt.

Bei der Konzeption der Verdichter-Turbine wird die Eigenschaft von Schaufelrädern genutzt, dass diese einerseits bei Anströmung durch ein Fluid mit erhöhtem Druck von der Hochdruckseite her als Turbine wirken und ein Abtriebsmoment erzeugen können und andererseits bei Antrieb durch ein Antriebsmoment selbst einen Fluidstrom unter Erhöhung des Drucks erzeugen können und so als Verdichter wirken. Die Auslegung des entsprechenden Schaufelrades und die Strömungsführung im Laufradgehäuse zum Einsatz als Verdichter-Turbine muss also beiden Einsatzzwecken Rechnung tragen. Dies kann in einer vorteilhaften Weiterbildung der Verdichter-Turbine mittels einer festen oder einer variablen Anordnung von strömungsführenden Leitschaufeln optimiert werden.

Bei der Konzeption des Motor-Generators wird die Eigenschaft von elektrischen Drehfeldmaschinen genutzt, dass diese einerseits bei Beaufschlagung mit einer Spannung und Strom als Elektromotor antreibend betrieben werden können und andererseits von einem externen Drehmoment angetrieben selbst Spannung erzeugen und Strom abgeben können. Die Auslegung der entsprechenden Drehfeldmaschine zum Einsatz als Motor-Generator muss also beiden Einsatzzwecken Rechnung tragen.

Die vorteilhafte Kombination von Verdichter-Turbine und Motorgenerator zu einem oben sogenannten und auch im Weiteren so bezeichneten Rekuperationslader ermöglicht in vorteilhafter Weise einen Betrieb der Verdichter-Turbine in beiden Strömungsrichtungen, nämlich elektromotorisch angetrieben als Verdichter in einer Verstärkerbetriebsart oder als Turbine den Generator antreibend in einer Rekuperationsbetriebsart. Eine weitere Möglichkeit besteht in der Neutralschaltung des Motor-Generators, was einem Freilauf der Verdichter-Turbine entspricht und in einer Standardbetriebsart genutzt werden kann.

Das erfindungsgemäße Betriebsverfahren für eine Aufladeeinrichtung eines Verbrennungsmotors gemäß der obigen Beschreibung ist dadurch gekennzeichnet, dass die Aufladeeinrichtung im Betrieb in Abhängigkeit vom Betriebsverhalten des Verbrennungsmotors und mit Hilfe der Ventilanordnung sowie dem Motor-Generator des Rekuperationsladers, zwischen einer Standardbetriebsart oder einer Verstärkerbetriebsart oder einer Rekuperationsbetriebsart umgeschaltet werden kann.

Wird nun bei angeforderter Drehzahlerhöhung oder bei erhöhter Last des Verbrennungsmotors in die Verstärkerbetriebsart der Aufladeeinrichtung umgeschaltet, so wird die Hochdruckseite der Verdichter-Turbine mittels der Ventilanordnung an die Frischluftzuführleitung angeschlossen und gleichzeitig der Motor-Generator als Antriebsmotor betrieben, so wird Frischluft über die Niederdruckseite der Verdichter-Turbine angesaugt, verdichtet und unter erhöhtem Druck in die Frischluftzuführleitung vor dem Abgasturbolader eingespeist, was eine beschleunigte Druckerhöhung in der Ladeluftleitung und im Ladeluftkrümmer und somit eine Drehmomenterhöhung bereits bei niedriger Drehzahl und somit ein verbessertes Beschleunigungsverhalten des Verbrennungsmotors zur Folge hat.

Wird nun andererseits eine schnelle Leistungsreduzierung des Verbrennungsmotors erforderlich oder der vom Frischluftverdichter des Abgasturboladers erzeugte oder erzeugbare Ladeluftmassenstrom im Niedriglastbetrieb nicht vollständig benötigt, so kann in die Rekuperationsbetriebsart der Aufladeeinrichtung umgeschaltet werden. Hierbei wird die Hochdruckseite der Verdichter-Turbine mittels der Ventilanordnung an die Ladeluftzuleitung angeschlossen und gleichzeitig der Motor-Generator als Generator betrieben. Nun wird der vom Verbrennungsmotor nicht benötigte Ladeluftmassenstrom unter hohem Druck auf die Verdichter-Turbine geleitet und treibt so den Motor-Generator an, der seinerseits das aufgebrachte Drehmoment in elektrische Energie umsetzt, die direkt einem anderen Verbraucher im Fahrzeug oder einem Speicher zugeführt werden kann. So wird die überschüssige Energie in der Aufladeeinrichtung nicht ungenutzt in die Umgebung abgegeben sondern kann einer sinnvolleren Nutzung, ggf. zu einem späteren Zeitpunkt zugeführt werden.

Wird der Verbrennungsmotor beispielsweise bei mittlerer, gleichbleibender Last betrieben, so kann die Aufladeeinrichtung in die Standardbetriebsart umgeschaltet werden. Dabei wird die Hochdruckseite der Verdichter-Turbine mittels der Ventilanordnung an die Frischluftzuführleitung angeschlossen und gleichzeitig der Motor-Generator neutral geschaltet, so kann Frischluft auch über die Verdichter-Turbine angesaugt werden, ohne dass diese zusätzlich verdichtet wird. Der vom Abgasturbolader erzeugte Ladedruck ist ausreichend und überschüssige Energie steht im System nicht zur Verfügung.

Die Vorteile der erfindungsgemäßen Aufladeeinrichtung sowie des entsprechenden Betriebsverfahrens liegen vor allem darin, dass je nach Betriebssituation des Verbrennungsmotors eine schnelle Drehmoment- und somit Drehzahlerhöhung unter Vermeidung eines "Turboloches" ermöglicht und im umgekehrten Fall der schnellen Leistungsreduzierung überschüssige Energie nicht ungenutzt abgeleitet werden muss sondern nutzbar gemacht werden kann.

Anhand der Figuren werden im Folgenden besonders vorteilhafte Ausführungsbeispiele und Weiterbildungen der Erfindung gemäß der abhängigen Ansprüche näher erläutert, obgleich der Gegenstand der Erfindung nicht auf diese Beispiele und insbesondere die darin gezeigten Merkmalskombinationen begrenzt ist.

Es zeigen:
- Fig. 1: eine vereinfachte schematische Darstellung eines Ausführungsbeispiels der erfindungsgemäßen Aufladeeinrichtung in Verbindung mit einem Verbrennungsmotor im Standardbetrieb;
- Fig. 2: eine vereinfachte schematische Darstellung eines zweiten Ausführungsbeispiels der erfindungsgemäßen Aufladeeinrichtung in Verbindung mit einem Verbrennungsmotor im Verstärkerbetrieb;
- Fig. 3: das zweite Ausführungsbeispiel der erfindungsgemäßen Aufladeeinrichtung gemäß Figur 2, im Rekuperationsbetrieb;
- Fig. 4: ein weiteres Ausführungsbeispiel der erfindungsgemäßen Aufladeeinrichtung, im Rekuperationsbetrieb.

Funktions- und Benennungsgleiche Gegenstände sind in den Figuren durchgehend mit den selben Bezugszeichen gekennzeichnet.

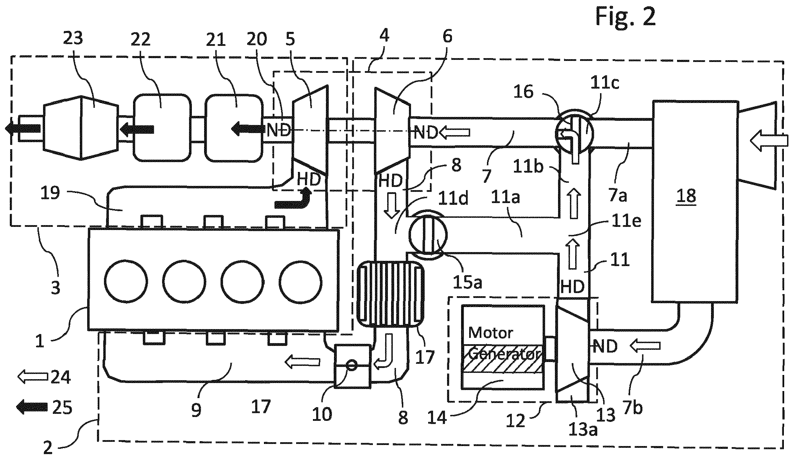

Das Ausführungsbeispiel der Erfindung in Figur 2 zeigt in schematischer Darstellung einen Verbrennungsmotor 1, hier als vierzylindriger Reihenmotor dargestellt, mit einem Ansaugtrakt 2 und einem Abgastrakt 3. Weiterhin dargestellt ist ein Abgasturbolader 4 mit einer Abgasturbine 5 und einem Frischluftverdichter 6 und ein sogenannter Rekuperationslader 12, der einen Turbinenverdichter 13 sowie einen elektromechanischen Motor-Generator 14 aufweist.

Zum Abgastrakt 3 gehören ein Abgaskrümmer 19, der am Verbrennungsmotor 1 angeschlossen ist, die Abgasturbine 5, die auf ihrer Hochdruckseite HD am Abgaskrümmer 19 angeschlossen ist, eine Abgasabführleitung 20, die auf den Niederdruckseite ND der Abgasturbine 5 angeschlossen ist, sowie ein Abgaskatalysator 21, ein Rußpartikelfilter 22 sowie ein Schalldämpfer 23, die entlang der Abgasabführleitung 20 angeordnet sind. Der Abgasmassenstrom 25 der vom Verbrennungsmotor 1 ausgestoßen wird, wird vom Abgaskrümmer 19 über die Abgasturbine 5 in die Abgasabführleitung 20 und durch Abgaskatalysator 21, Rußpartikelfilter 22 und Schalldämpfer 23 in die Umgebung ausgestoßen.

Zum Ansaugtrakt 2 gehören ein Ladeluftkrümmer 9, der am Verbrennungsmotor 1 angeschlossen ist, der Frischluftverdichter 6 des Abgasturboladers 4 sowie eine Ladeluftzuleitung 8, die einerseits über ein Drosselklappenventil 10 mit dem Ladeluftkrümmer 9 verbunden ist und die andererseits mit der Hochdruckseite HD des Frischluftverdichters 6 verbunden ist. Weiterhin umfasst der Ansaugtrakt 2 eine Frischluftzuführleitung 7, die einerseits mit der Niederdruckseite ND des Frischluftverdichters 6 und andererseits über einen Ansaugstutzen 7a mit einem Frischluftfilterkasten verbunden ist. Ebenfalls dem Ansaugtrakt 2 zugeordnet ist ein Rekuperationslader 12, der eine Verdichter-Turbine 13 und einen damit gekoppelten Motor-Generator 14 aufweist. Die Niederdruckseite ND der Verdichter-Turbine 13 ist über einen Ansaugstutzen 7b mit dem Frischluftfilterkasten 18 verbunden. An der Hochdruckseite HD der Verdichter-Turbine 13 ist eine Verzweigungsleitung 11 angeschlossen, die sich in dem Verzweigungspunkt 11e aufteilt in einen Ladeluftzweig 11a, und einen Frischluftzweig 11b. Der Frischluftzweig 11b ist in einem Frischluftzweiganschlusspunkt 11c an die Frischluftzuführleitung 7 und der Ladeluftzweig 11a ist in einem Ladeluftzweiganschlusspunkt 11d an die Ladeluftzuleitung 8 angeschlossen und verbindet somit die Hochdruckseite HD der Verdichter-Turbine 13 sowohl über die Verzweigungsleitung 11,den Frischluftzweig 11b und die Frischluftzuführleitung 7 mit der Niederdruckseite ND des Frischluftverdichters 6 des Abgasturboladers 4 als auch über die Verzweigungsleitung 11, den Ladeluftzweig 11a und die Ladeluftzuleitung 8 mit der Hochdruckseite HD des Frischluftverdichters 6 des Abgasturboladers 4. Weiterhin ist in der Ladeluftzuleitung 8, zwischen der Hochdruckseite HD des Frischluftverdichters 6 und dem Ladeluftzweiganschlusspunkt 11d ein Ladeluftkühler 17 angeordnet.

Im Frischluftzweig 11b sowie im Ladeluftzweig 11a als auch in der Frischluftzuführleitung 7 zwischen dem Frischluftzweiganschlusspunkt 11c und dem Ansaugstutzen 7a der Frischluftzuleitung 7, also in einem Frischluftmassenstrom 24 stromaufwärts zum Frischluftzweiganschlusspunkt 11c ist je ein Absperrventil (15a, 15b, 15c) angeordnet. Durch entsprechende Ventilstellung der Absperrventile (15a, 15b, 15c) ist die Strömungsrichtung des Frischluftmassenstromes 24, hier durch die hellen Pfeile dargestellt, in der Verzweigungsleitung 11 und über die Verdichter-Turbine 13 umschaltbar.

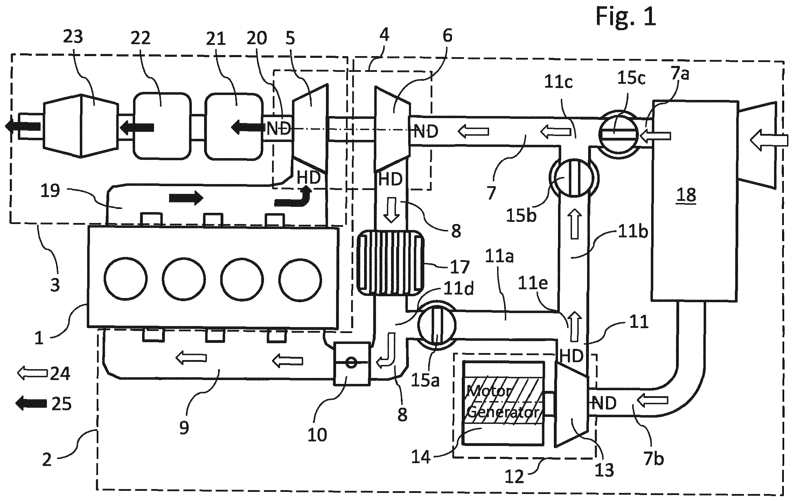

Die in Figur 1 gezeigte Ventilstellung der Absperrventile (15a, 15b, 15c) kennzeichnet die Standardbetriebsart der Aufladeeinrichtung, die eingestellt wird, wenn der Verbrennungsmotor 1 bei mehr oder weniger gleichbleibender Last in einem mehr oder weniger gleichbleibenden niedrigen bis mittleren Drehzahlband läuft. Dabei ist das Absperrventil 15c und damit die Frischluftzuführleitung 7 in dem Frischluftmassenstrom 24 Richtung stromaufwärts vom Frischluftzweiganschlusspunkt 11c und das Absperrventil 15b und damit der Frischluftzweig 11b geöffnet und das Absperrventil 15a und damit der Ladeluftzweig 11a geschlossen. Gleichzeitig ist der Motor-Generator 14 des Rekuperationsladers 14 neutral geschaltet, was dadurch symbolisiert ist, dass sowohl die "Motor"- als auch die "Generator"-Bezeichnung durchgestrichen sind.

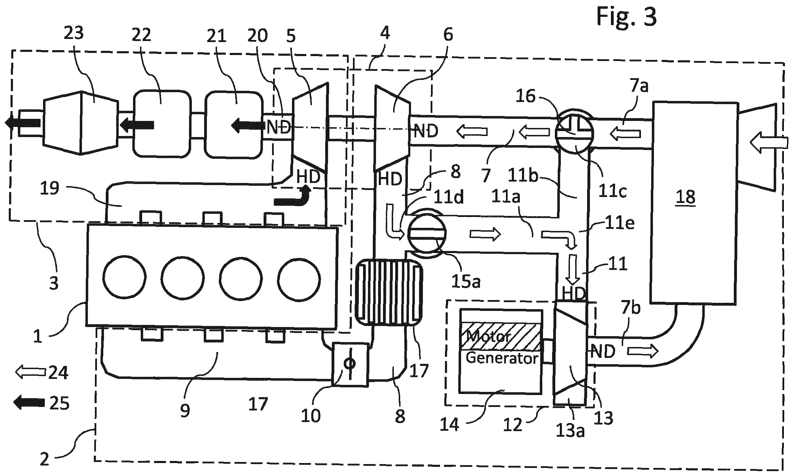

In der Standardbetriebsart wird somit ein Frischluftmassenstrom 24 über den Ansaugstutzen 7a der Frischluftzuführleitung 7 und gleichermaßen über den Frischluftzweig 11, die freilaufende Verdichter-Turbine 13 und den Ansaugstutzen 7b der Verdichter-Turbine 13 aus dem Frischluftfilterkasten 18 von der Niederdruckseite ND des Frischluftverdichters 6 des Abgasturboladers 4 angesaugt. Im Frischluftverdichter 6 des Abgasturboladers 4 wird der Frischluftmassenstrom 24 verdichtet und auf der Hochdruckseite HD des Frischluftverdichters 6 unter erhöhtem Druck in die Ladeluftzuleitung 8 und über das zumindest teilweise geöffnete Drosselklappenventil 10 und den Ladeluftkrümmer 9 in die Zylinder des Verbrennungsmotors 1 gepumpt. Der auf der Hochdruckseite HD des Frischluftverdichters 6 abgegebene Frischluftmassenstrom 24 wird in diesem Zusammenhang auch als Ladeluftmassenstrom (24) bezeichnet, wodurch das erhöhte Druckniveau gekennzeichnet werden soll. Mit Hilfe des in der Ladeluftzuleitung 8 angeordneten Ladeluftkühlers 17 wird der Ladeluftmassenstrom 24 gekühlt, wodurch die den Zylindern des Verbrennungsmotors 1 zugeführte Sauerstoffmenge und somit die Leistung des Verbrennungsmotors 1 weiter erhöht werden kann. Der Ladeluftkühler 17 ist hier zwischen der Hochdruckseite HD des Frischluftverdichters 6 und dem Ladeluftzweiganschlusspunkt 11d angeordnet, was im Falle einer Umschaltung auf die Rekuperationsbetriebsart, die anhand von Figur 3 weiter hinten im Text noch näher erläutert wird, bewirkt, dass der überschüssige Ladeluftmassenstrom 24 gekühlt auf die Verdichter-Turbine 13 des Rekuperationsladers 12 geleitet wird. Dies hat den Vorteil, dass die Komponenten der Verdichter-Turbine 13 nicht für erhöhte Temperaturen ausgelegt werden müssen und somit ein kostengünstigerer Aufbau ermöglicht ist.

Figur 2 zeigt im Wesentlichen die gleiche Konfiguration von Verbrennungsmotor 1, Abgastrakt 3 und Ansaugtrakt 2 wie Figur 1. Im Ansaugtrakt 2 unterscheidet sich die Ausführungsvariante jedoch dadurch, dass das Absperrventil 15b im Frischluftzweig 11b und das Absperrventil 15c in der Frischluftzuführleitung 7 zusammengenommen durch ein Umschaltventil 16 im Frischluftzweiganschlusspunkt 11c ersetzt sind. Dies reduziert die Anzahl der erforderlichen Einzelkomponenten vereinfacht die Ansteuerung der Ventile und reduziert die Gesamt-Baugröße der Aufladeeinrichtung.

Das Umschaltventil 16 ist, wie auch aus der schematischen Darstellung zu erkennen ist, so eingerichtet, dass es in einer von drei Schaltstellungen den Durchgang vom Frischluftzweig 11b zur Frischluftzuführleitung 7 freigibt während es den Durchgang von der Frischluftzuführleitung 7 zum Ansaugstutzen 7a, also die Frischluftzuführleitung 7 stromaufwärts des Frischluftzweiganschlusspunktes 11c, sperrt, wie in Figur 2 dargestellt. In einer weiteren der drei möglichen Schaltstellungen sperrt das Umschaltventil den Durchgang vom Frischluftzweig 11b zur Frischluftzuführleitung 7 während es den Durchgang von der Frischluftzuführleitung 7 zum Ansaugstutzen 7a, also die Frischluftzuführleitung 7 stromaufwärts des Frischluftzweiganschlusspunktes 11c, freigibt, wie in Figur 3 dargestellt. In der dritten Schaltstellung des Umschaltventils 16 wird sowohl der Durchgang vom Frischluftzweig 11b zur Frischluftzuführleitung 7 als auch der Durchgang von der Frischluftzuführleitung 7 zum Ansaugstutzen 7a, also die Frischluftzuführleitung 7 stromaufwärts des Frischluftzweiganschlusspunktes 11c, freigegeben, dies entspricht der Ventilstellung der beiden Absperrventile 15b und 15c wie in der Figur 1 dargestellt.

Weiterhin ist der Ladeluftkühler 17 in der Ladeluftzuleitung 8 in Strömungsrichtung des Ladeluftmassenstromes 24 stromabwärts des Ladeluftzweiganschlusspunktes 11d, also zwischen Ladeluftzweiganschlusspunkt 11d und dem Drosselklappenventil 10 angeordnet. Dies bewirkt im Falle einer Umschaltung auf die Rekuperationsbetriebsart, die anhand von Figur 3 weiter hinten im Text noch näher erläutert wird, dass der überschüssige Ladeluftmassenstrom 24 ungekühlt auf die Verdichter-Turbine 13 des Rekuperationsladers 12 geleitet wird. Dies hat den Vorteil, dass der Energiegehalt des Ladeluftmassenstromes 24 für die Rekuperation also die Energierückgewinnung maximal ist, da dem Ladeluftmassenstrom 24 keine Energie durch Kühlung entzogen und in die Umgebung abgegeben wird.

Darüber hinaus ist hier die Verdichter-Turbine 13 mit einer feststehenden oder variablen Leitschaufelanordnung 13a im Verdichter-Turbinen-Gehäuse ausgestattet, was in Figur 2 jedoch nur grob schematisch dargestellt ist. Die Leitschaufelanordnung 13a dient in der in Figur 2 dargestellten Verstärkerbetriebsart der Aufladeeinrichtung zur Optimierung des Abströmverhaltens des Frischluftmassenstromes 24 auf der Hochdruckseite HD der Verdichter-Turbine.

Weiterhin kennzeichnet die in Figur 2 gezeigte Ventilstellung von Absperrventil 15a und Umschaltventil 16 die Verstärkerbetriebsart der Aufladeeinrichtung, die eingestellt wird, wenn die Last des Verbrennungsmotor 1 dynamisch angehoben oder ein dynamischer Drehzahlanstieg angefordert oder der Verbrennungsmotor bei oder nahe bei Maximallast betrieben wird.

Dabei ist vom Umschaltventil 16 der Durchgang vom Frischluftzweig 11b zur Frischluftzuführleitung 7 freigegeben, während der Durchgang von der Frischluftzuführleitung 7 zum Ansaugstutzen 7a, also die Frischluftzuführleitung 7 stromaufwärts des Frischluftzweiganschlusspunktes 11c, gesperrt ist.

Das Absperrventil 15a und damit der Ladeluftzweig 11a bleibt geschlossen. Gleichzeitig ist der Motor-Generator 14 des Rekuperationsladers 12 auf Motorbetrieb geschaltet, was dadurch symbolisiert ist, dass nur die "Generator"-Bezeichnung, nicht jedoch die "Motor"-Bezeichnung durchgestrichen ist. Im Motorbetrieb des Motor-Generators 14 wird die Verdichter-Turbine 13 vom Motor-Generator 14 angetrieben und wirkt somit als Verdichter.

In der Verstärkerbetriebsart wird somit ein Frischluftmassenstrom 24 nur über den Ansaugstutzen 7b der Verdichter-Turbine 13 des Rekuperationsladers 12 aus dem Frischluftfilterkasten 18 von der Niederdruckseite ND der Verdichter-Turbine 13 angesaugt. In der Verdichter-Turbine 13 des Rekuperationsladers 12 wird der Frischluftmassenstrom 24 vorverdichtet und auf der Hochdruckseite HD der Verdichter-Turbine 13 unter erhöhtem Druck über die Verzweigungsleitung 11, den Frischluftzweig 11b und das Umschaltventil 16 in die Frischluftzuführleitung 7 eingespeist. Diese Druckerhöhung setzt sich ohne Verzögerung über den Frischluftverdichter 6, den Ladeluftkühler 17 und das in diesem Fall komplett geöffnete Drosselklappenventil 10 fort wodurch der Ladeluftmassenstrom 24 sehr schnell unter erhöhtem Druck im Ladeluftkrümmer 9 zur Verfügung steht und so ein verbessertes Ansprechverhalten des Verbrennungsmotors gewährleistet.

Wenn in der weiteren Folge der Abgasturbolader sein Trägheitsmoment überwunden hat wird der vorverdichtete Frischluftmassenstrom 24 durch den Frischluftverdichter 6 weiter verdichtet, also der Druck des Ladeluftmassenstroms 24 weiter erhöht, was zu einer weiteren Leistungserhöhung des Verbrennungsmotors 1 führt.

Figur 3 zeigt den gleichen Aufbau der Aufladeeinrichtung wie Figur 2, jedoch kennzeichnet die in Figur 3 gezeigte Ventilstellung von Absperrventil 15a und Umschaltventil 16 die Rekuperationsbetriebsart der Aufladeeinrichtung, die eingestellt wird, wenn die Last des Verbrennungsmotor 1 dynamisch reduziert und ein dynamischer Drehzahlabfall vorgegeben wird oder aus sonstigen Gründen ein überschüssiger Ladeluftmassenstrom 24 zur Verfügung steht. Dies entspricht im Fahrbetrieb eines Kraftfahrzeugs etwa einem mehr oder weniger schnellen Bremsvorgang bei abgekoppeltem Getriebe oder auch einem Schubbetrieb bei bremsendem Verbrennungsmotor 1. Dabei wird das Drosselklappenventil schnell geschlossen beziehungsweise geschlossen gehalten, während der Frischluftverdichter 6 des Abgasturboladers 4, bedingt durch seine Trägheit zunächst den Frischluftmassenstrom 24 weiter fördert und verdichtet. In der Rekuperationsbetriebsart ist in diesem Fall vom Umschaltventil 16 der Durchgang vom Frischluftzweig 11b zur Frischluftzuführleitung 7 gesperrt, während der Durchgang von der Frischluftzuführleitung 7 zum Ansaugstutzen 7a, also die Frischluftzuführleitung 7 stromaufwärts des Frischluftzweiganschlusspunktes 11c, geöffnet ist. Das Absperrventil 15a und damit der Ladeluftzweig 11a ist nunmehr geöffnet. Dabei muss das Absperrventil 15a in dem Ladeluftzweig 11a nicht in jedem Fall komplett geöffnet sein sondern es kann die Ventilöffnung über eine externe Steuereinheit (nicht dargestellt) auch so geregelt sein, dass der momentane Soll-Ladedruck gehalten und genau nur der überschüssige Ladeluftmassenstromanteil aus der Ladeluftzuleitung 8 abgesteuert und auf die Verdichter-Turbine 13 zur Energierückgewinnung geführt wird.

Gleichzeitig ist der Motor-Generator 14 des Rekuperationsladers 14 auf Generatorbetrieb geschaltet, was dadurch symbolisiert ist, dass nur die "Motor"-Bezeichnung, nicht jedoch die "Generator"-Bezeichnung durchgestrichen ist.

Der vom Frischluftverdichter 6 gelieferte, überschüssige Ladeluftmassenstrom 24 wird somit teilweise oder vollständig über das geöffnete Absperrventil 15a, den Ladeluftzweig 11a und die Verzweigungsleitung 11 auf die Hochdruckseite HD der Verdichter-Turbine 13 geführt. Die Verdichter-Turbine 13 wird vom Ladeluftmassenstrom 24 von der Hochdruckseite HD her angeströmt. Zur Optimierung der Anströmung kann, sofern vorhanden, eine variable Leitschaufelanordnung 13a auf den Turbinenbetrieb umgestellt werden.

Durch den Ladeluftmassenstrom 24 angetrieben, wirkt die Verdichter-Turbine 6 somit als Turbine, die wiederum den in Generatorbetrieb geschalteten Motor-Generator 14 antreibt. Durch diesen Antrieb erzeugt der Motor-Generator 14 elektrische Energie, die vorteilhaft in einen entsprechenden Speicher, beispielsweise eine Batterie oder ein Kondensator (nicht dargestellt), eingeleitet werden kann. So kann vorteilhaft überschüssige Energie im System gehalten und nutzbar gemacht werden.

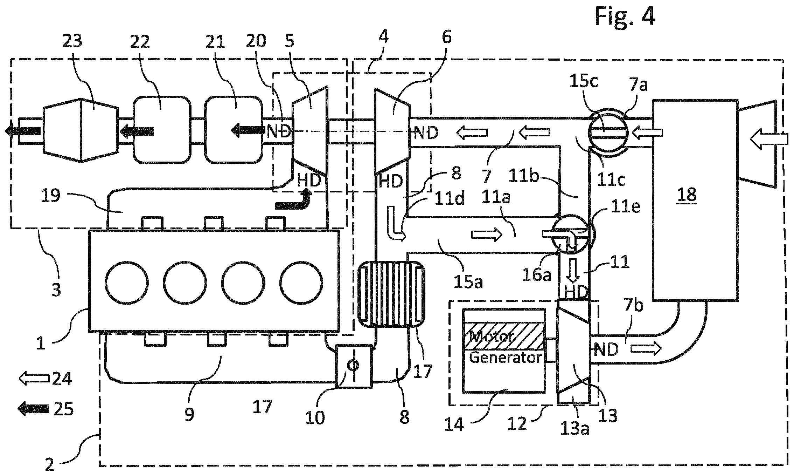

Figur 4 zeigt ein weiteres Ausführungsbeispiel für die erfindungsgemäße Aufladeeinrichtung. Dieses Ausführungsbeispiel ist gegenüber dem Ausführungsbeispiel der Figuren 2 und 4 durch eine geänderte Ventilanordnung gekennzeichnet, wobei ein Absperrventil im Ladeluftzweig und ein Absperrventil im Frischluftzweig 11b zusammengenommen durch ein Umschaltventil 16a im Verzweigungspunkt 11e der Verzweigungsleitung 11 ersetzt sind und ein weiteres Absperrventil 15c in der Frischluftzuführleitung 7 in einem Frischluftmassenstrom 24 stromaufwärts zum Frischluftzweiganschlusspunkt 11c, also zwischen dem Frischluftzweiganschlusspunkt 11c und dem Ansaugstutzen 7a der Frischluftzuführleitung angeordnet ist.

Das Umschaltventil 16a ist in diesem Fall so eingerichtet, dass es in einer von zwei Schaltstellungen den Durchgang von der Verzweigungsleitung 11 zum Frischluftzweig 11b und somit zur Frischluftzuführleitung 7 freigibt während es den Durchgang zum Ladeluftzweig 11a sperrt, was der Ventilstellung in der Standardbetriebsart und der Verstärkerbetriebsart entspricht (nicht dargestellt). In der zweiten Schaltstellung des Umschaltventils 17 ist, wie in Figur 4 dargestellt, der Durchgang von der Verzweigungsleitung 11 zum Frischluftzweig 11b und somit zur Frischluftzuführleitung 7 gesperrt während der Durchgang zum Ladeluftzweig 11a freigegeben ist, was der Ventilstellung in der Rekuperationsbetriebsart entspricht.

In der Rekuperationsbetriebsart ist gleichzeitig das Absperrventil 15c in der Frischluftzuführleitung 7 geöffnet, sodass der Frischluftverdichter 6 des Abgasturboladers 4 einen Frischluftmassenstrom 24 vom Frischluftfilterkasten 18 her ansaugen kann. Die Führung des Frischluft- oder Ladeluftmassenstroms 24 entspricht somit dem in Figur 3 gezeigten Beispiel.

Nochmal kurz zusammengefasst betrifft die Erfindung also eine Aufladeeinrichtung und ein Betriebsverfahren für diese Aufladeeinrichtung für einen Verbrennungsmotor 1, die einen Abgasturbolader 4 und einen Rekuperationslader 12 aufweist, der eine Verdichterturbine 13 und einen damit gekoppelten elektromechanischen Motor-Generator 14 aufweist. Dabei ist die Hochdruckseite HD der Verdichterturbine 13 mittels einer Ventilanordnung einerseits an die Frischluftzuführleitung 7 vor dem Abgasturbolader 4 und andererseits an eine Ladeluftzuleitung 8 nach dem Abgasturbolader 4 anschließbar, wobei über die Niederdruckseite ND der Verdichterturbine 13 ein Frischluftmassenstrom 24 ansaugbar oder ein Ladeluftmassenstrom 24 abblasbar ist.

Der genannte Rekuperationslader 12 kann mittels einer Ventilanordnung und dem Motor-Generator 14 zwischen einer Standardbetriebsart, einer Verstärkerbetriebsart und einer Rekuperationsbetriebsart umgeschaltet werden, wobei er einerseits in der Verstärkerbetriebsart vom Motor-Generator 14 angetrieben als Verdichter zur Druckerhöhung in der Frischluftzuführleitung 8 wirkt oder andererseits vom Ladeluftstrom angetrieben als Turbine zur Energierückgewinnung mittels des Motor-Generators 14 wirkt oder neutral betreibbar ist.

## Patentansprüche

1. Aufladeeinrichtung für einen Verbrennungsmotor (1) mit einem Ansaugtrakt (2) und einem Abgastrakt (3), die aufweist,
- einen Abgasturbolader (4) mit einer Abgasturbine (5), die im Abgastrakt (3) angeordnet ist und einen Frischluftverdichter (6) mit einer Niederdruckseite (ND) und einer Hochdruckseite (HD), der im Ansaugtrakt (2) angeordnet ist;
- eine Frischluftzuführleitung (7), an die der Frischluftverdichter (6) auf seiner Niederdruckseite (ND) angeschlossen ist und
- eine Ladeluftzuleitung (8), die die Hochdruckseite (HD) des Frischluftverdichters (6) mit einem Ladeluftkrümmer (9) des Verbrennungsmotors (1) verbindet,
**dadurch gekennzeichnet, dass**
- die Aufladeeinrichtung einen Rekuperationslader (12) aufweist, der eine Verdichterturbine (13) mit einer Hochdruckseite (HD) und einer Niederdruckseite (ND) und einen damit gekoppelten elektromechanischen Motor-Generator (14) aufweist,
wobei die Hochdruckseite (HD) der Verdichterturbine (13) mittels einer Ventilanordnung einerseits an die Frischluftzuführleitung (7) und andererseits an die Ladeluftzuleitung (8) anschließbar ist und über die Niederdruckseite (ND) der Verdichterturbine ein Frischluftmassenstrom (24) ansaugbar oder ein Ladeluftmassenstrom (24) abblasbar ist,
- wobei der Rekuperationslader (12) einerseits vom Motor-Generator (14) angetrieben als Verdichter zur Druckerhöhung des Frischluftmassenstromes (24) in der Frischluftzuführleitung (8) und andererseits vom Ladeluftmassenstrom (24) angetrieben als Turbine zur Energierückgewinnung mittels des Motor-Generators (14) oder neutral betreibbar ist.

2. Aufladeeinrichtung nach Anspruch 1, **dadurch gekennzeichnet, dass** die Verdichterturbine (13) über eine, einen Verzweigungspunkt (11e) aufweisende Verzweigungsleitung (11) mit einem Frischluftzweig (11b) in einem Frischluftzweiganschlußpunkt (11c) an die Frischluftzuführleitung (7) und mit einem Ladeluftzweig (11a) in einem Ladeluftzweiganschlußpunkt (11d) an die Ladeluftzuleitung (8) angeschlossen ist und im Frischluftzweig (11b) sowie im Ladeluftzweig (11a) als auch in der Frischluftzuführleitung (7) in einem Frischluftmassenstrom (24) stromaufwärts zum Frischluftzweiganschlusspunkt (11c) je ein Absperrventil (15a, 15b, 15c) angeordnet ist, wobei durch entsprechende Ventilstellung der Absperrventile (15a, 15b, 15c) die Strömungsrichtung eines Frischluftmassenstromes (24) in der Verzweigungsleitung (11) und über die Verdichterturbine (13) umschaltbar ist.

3. Aufladeeinrichtung nach Anspruch 2, **dadurch gekennzeichnet, dass** das Absperrventil (15b) im Frischluftzweig (11b) und das Absperrventil (15c) in der Frischluftzuführleitung (7) durch ein Umschaltventil (16) im Frischluftzweiganschlusspunkt (11c) ersetzt sind.

4. Aufladeeinrichtung nach Anspruch 2, **dadurch gekennzeichnet, dass** das Absperrventil (15b) im Frischluftzweig (11b) und das Absperrventil (15a) im Ladeluftzweig (11a) durch ein Umschaltventil (16a) im Verzweigungspunkt (11e) der Verzweigungsleitung (11) ersetzt sind.

5. Aufladeeinrichtung nach einem der Ansprüche 2 bis 4, **dadurch gekennzeichnet, dass** ein Ladeluftkühler (17) in der Ladeluftzuleitung (8) vorgesehen ist, wobei der Ladeluftzweiganschlusspunkt (11d) des Ladeluftzweigs (11a) in einem Frischluftmassenstrom (24) stromabwärts des Ladeluftkühlers (17) an der Ladeluftzuleitung (8) angeordnet ist.

6. Aufladeeinrichtung nach einem der Ansprüche 2 bis 4, **dadurch gekennzeichnet, dass** ein Ladeluftkühler (17) in der Ladeluftzuleitung (8) vorgesehen ist, wobei der Ladeluftzweiganschlusspunkt (11d) des Ladeluftzweigs (11a) in einem Frischluftmassenstrom (24) stromaufwärts des Ladeluftkühlers (17)an der Ladeluftzuleitung (8) angeordnet ist.

7. Aufladeeinrichtung nach einem der Ansprüche 1 bis 6, **dadurch gekennzeichnet, dass** die Verdichter-Turbine (13) des Rekuperationsladers (12) mit einer feststehenden oder variablen Leitschaufelanordnung im Verdichter-Turbinen-Gehäuse zur Optimierung des Abströmverhaltens oder Anströmverhaltens des Frischluftmassenstroms (24) bzw. des Ladeluftmassenstroms (24) ausgestattet ist.

8. Aufladeeinrichtung nach einem der Ansprüche 1 bis 7 **dadurch gekennzeichnet, dass** die Frischluftzuführleitung (7) über einen ersten Ansaugstutzen (7a) und die Niederdruckseite (ND) der Verdichterturbine (13) über einen weiteren Ansaugstutzen (7b) an einen Frischluftfilterkasten 18 angeschlossen sind.

9. Betriebsverfahren für eine Aufladeeinrichtung eines Verbrennungsmotors nach einem der Ansprüche 1 bis 8, **dadurch gekennzeichnet, dass** die Aufladeeinrichtung im Betrieb in Abhängigkeit vom Betriebsverhalten des Verbrennungsmotors und mit Hilfe der Ventilanordnung sowie dem Motor-Generator (14) des Rekuperationsladers (12), zwischen einer Standardbetriebsart oder einer Verstärkerbetriebsart oder einer Rekuperationsbetriebsart umgeschaltet werden kann.

10. Betriebsverfahren für eine Aufladeeinrichtung eines Verbrennungsmotors gemäß einem der Ansprüche 2 bis 8 und nach Anspruch 9, **dadurch gekennzeichnet, dass** die Ventilanordnung Absperrventile (15a, 15b, 15c) und/oder ein Umschaltventil (16, 17) aufweist,
- wobei zur Durchführung der Standardbetriebsart, die Frischluftzuführleitung (7) in dem Frischluftmassenstrom (24) Richtung stromaufwärts vom Frischluftzweiganschlusspunkt (11c) und der Frischluftzweig (11b) geöffnet und der Ladeluftzweig (11a) geschlossen, sowie der Motor-Generator (14) neutral geschaltet wird,
- wobei zur Durchführung der Verstärkerbetriebsart, die Frischluftzuführleitung (7) in dem Frischluftmassenstrom (24) Richtung stromaufwärts vom Frischluftzweiganschlusspunkt (11c) und der Ladeluftzweig geschlossen und der Frischluftzweig (11b) geöffnet wird, sowie der Motor-Generator (14) in Motorbetrieb, die Verdichterturbine (13) zur Druckerhöhung in der Frischluftzuführleitung (8) antreibend, geschaltet wird und
- wobei zur Durchführung der Rekuperationsbetriebsart, die Frischluftzuführleitung (7) in dem Frischluftmassenstrom (24) Richtung stromaufwärts vom Frischluftzweiganschlusspunkt (11c) und der Ladeluftzweig geöffnet und der Frischluftzweig geschlossen, sowie der Motor-Generator (14) in Generatorbetrieb, von der Verdichterturbine (13) zur Energierückgewinnung angetrieben, geschaltet wird.

## Claims

1. Supercharging device for an internal combustion engine (1) having an intake tract (2) and having an exhaust-gas tract (3), which supercharging device has
- an exhaust-gas turbocharger (4) having an exhaust-gas turbine (5), which is arranged in the exhaust-gas tract (3), and a fresh-air compressor (6) having a low-pressure side (LP) and a high-pressure side (HP), which is arranged in the intake tract (2) ;
- a fresh-air supply line (7) to which the fresh-air compressor (6) is connected on its low-pressure side (LP), and
- a charge-air feed line (8) which connects the high-pressure side (HP) of the fresh-air compressor (6) to a charge-air manifold (9) of the internal combustion engine (1),
**characterized in that**
- the supercharging device has a recuperation charger (12) which has a compressor-turbine (13) with a high-pressure side (HP) and a low-pressure side (LP) and which has an electromechanical motor-generator (14) coupled to said compressor-turbine,
wherein the high-pressure side (HP) of the compressor-turbine (13) is connectable by means of a valve arrangement at one side to the fresh-air supply line (7) and at the other side to the charge-air feed line (8) and a fresh-air mass flow (24) can be drawn in, or a charge-air mass flow (24) can be discharged, via the low-pressure side (LP) of the compressor-turbine,
- wherein the recuperation charger (12) is operable firstly in a manner driven by the motor-generator (14) as a compressor for increasing the pressure of the fresh-air mass flow (24) in the fresh-air supply line (8), and is operable secondly in a manner driven by the charge-air mass flow (24) as a turbine for energy recovery by means of the motor-generator (14), or is operable neutrally.

2. Supercharging device according to Claim 1, **characterized in that** the compressor-turbine (13) is, via a branching line (11) which has a branching point (11e), connected by means of a fresh-air branch (11b) to the fresh-air supply line (7) at a fresh-air branch connection point (11c) and connected by means of a charge-air branch (11a) to the charge-air feed line (8) at a charge-air branch connection point (11d), and in each case one shut-off valve (15a, 15b, 15c) is arranged in the fresh-air branch (11b) and in the charge-air branch (11a) and also in the fresh-air supply line (7), upstream of the fresh-air branch connection point (11c) in a fresh-air mass flow (24), wherein the flow direction of a fresh-air mass flow (24) in the branching line (11) and via the compressor-turbine (13) can be switched through corresponding valve setting of the shut-off valves (15a, 15b, 15c).

3. Supercharging device according to Claim 2, **characterized in that** the shut-off valve (15b) in the fresh-air branch (11b) and the shut-off valve (15c) in the fresh-air supply line (7) are replaced by a switching valve (16) at the fresh-air branch connection point (11c).

4. Supercharging device according to Claim 2, **characterized in that** the shut-off valve (15b) in the fresh-air branch (11b) and the shut-off valve (15a) in the charge-air branch (11a) are replaced by a switching valve (16a) at the branching point (11e) of the branching line (11).

5. Supercharging device according to one of Claims 2 to 4, **characterized in that** a charge-air cooler (17) is provided in the charge-air feed line (8), wherein the charge-air branch connection point (11d) of the charge-air branch (11a) is arranged downstream, in a fresh-air mass flow (24), of the charge-air cooler (17) in the charge-air feed line (8).

6. Supercharging device according to one of Claims 2 to 4, **characterized in that** a charge-air cooler (17) is provided in the charge-air feed line (8), wherein the charge-air branch connection point (11d) of the charge-air branch (11a) is arranged upstream, in a fresh-air mass flow (24), of the charge-air cooler (17) in the charge-air feed line (8).

7. Supercharging device according to one of Claims 1 to 6, **characterized in that** the compressor-turbine (13) of the recuperation charger (12) is equipped with a fixed or variable guide vane arrangement in the compressor-turbine housing for the purposes of optimizing the outflow behavior or inflow behavior of the fresh-air mass flow (24) or of the charge-air mass flow (24).

8. Supercharging device according to one of Claims 1 to 7, **characterized in that** the fresh-air supply line (7) is connected via a first intake connector (7a), and the low-pressure side (LP) of the compressor-turbine (13) is connected via a further intake connector (7b), to a fresh-air filter box (18) .

9. Operating method for a supercharging device of an internal combustion engine according to one of Claims 1 to 8, **characterized in that** the supercharging device can, during operation, be switched between a standard operating mode or a booster operating mode or a recuperation operating mode in a manner dependent on the operating behavior of the internal combustion engine and by means of the valve arrangement and the motor-generator (14) of the recuperation charger (12).

10. Operating method for a supercharging device of an internal combustion engine according to one of Claims 2 to 8 and according to Claim 9, **characterized in that** the valve arrangement has shut-off valves (15a, 15b, 15c) and/or a switching valve (16, 17),
- wherein, to implement the standard operating mode, the fresh-air supply line (7), upstream of the fresh-air branch connection point (11c) in the fresh-air mass flow (24) direction, and the fresh-air branch (11b) are opened, and the charge-air branch (11a) is closed, and the motor-generator (14) is switched into a neutral state,
- wherein, to implement the booster operating mode, the fresh-air supply line (7), upstream of the fresh-air branch connection point (11c) in the fresh-air mass flow (24) direction, and the charge-air branch are closed, and the fresh-air branch (11b) is opened, and the motor-generator (14) is switched into the motor mode, so as to drive the compressor-turbine (13) for the purposes of increasing pressure in the fresh-air supply line (8), and
- wherein, to implement the recuperation operating mode, the fresh-air supply line (7), upstream of the fresh-air branch connection point (11c) in the fresh-air mass flow (24) direction, and the charge-air branch are opened, and the fresh-air branch is closed, and the motor-generator (14) is switched into the generator mode, so as to be driven by the compressor-turbine (13) for the purposes of energy recovery.

## Revendications

1. Dispositif de suralimentation pour un moteur à combustion interne (1) comprenant un conduit d'admission (2) et un conduit d'échappement (3), qui présente :
- un turbocompresseur à gaz d'échappement (4) avec une turbine à gaz d'échappement (5) qui est disposée dans le conduit d'échappement (3) et un compresseur d'air frais (6) avec un côté basse pression (ND) et un côté haute pression (HD) qui est disposé dans le conduit d'admission (2) ;
- une conduite d'alimentation en air frais (7) à laquelle est raccordé le compresseur d'air frais (6) au niveau de son côté basse pression (ND) et
- une conduite d'alimentation en air de suralimentation (8) qui relie le côté haute pression (HD) du compresseur d'air frais (6) à un collecteur d'air de suralimentation (9) du moteur à combustion interne (1),
**caractérisé en ce que**
- le dispositif de suralimentation présente un chargeur à récupération (12) qui présente une turbine de compresseur (13) avec un côté haute pression (HD) et un côté basse pression (ND) et un moteur-générateur électromécanique (14) accouplé à celle-ci,
le côté haute pression (HD) de la turbine de compresseur (13) pouvant être raccordé au moyen d'un agencement de soupapes d'une part à la conduite d'alimentation en air frais (7) et d'autre part à la conduite d'alimentation en air de suralimentation (8) et un débit massique d'air frais (24) pouvant être aspiré ou un débit massique d'air de suralimentation (24) pouvant être soufflé par le biais du côté basse pression (ND) de la turbine de compresseur,
- le chargeur à récupération (12) pouvant être entraîné d'une part par le moteur-générateur (14) en tant que compresseur pour augmenter la pression du débit massique d'air frais (24) dans la conduite d'alimentation en air frais (8) et d'autre part pouvant être entraîné par le débit massique d'air de suralimentation (24) en tant que turbine pour la récupération d'énergie au moyen du moteur-générateur (14) ou pouvant fonctionner en mode neutre.

2. Dispositif de suralimentation selon la revendication 1, **caractérisé en ce que** la turbine de compresseur (13) est raccordée par le biais d'une conduite de branchement (11) présentant un point de branchement (11e) par une branche d'air frais (11b) en un point de raccordement à une branche d'air frais (11c) à la conduite d'alimentation en air frais (7) et par une branche d'air de suralimentation (11a) en un point de raccordement à une branche d'air de suralimentation (11d) à la conduite d'alimentation en air de suralimentation (8) et un clapet antiretour (15a, 15b, 15c) étant à chaque fois disposé dans la branche d'air frais (11b) ainsi que dans la branche de suralimentation (11a) et dans la conduite d'alimentation en air frais (7) dans un débit massique d'air frais (24) en amont du point de raccordement à une branche d'air frais (11c), le sens d'écoulement d'un débit massique d'air frais (24) dans la conduite de branchement (11) et via la turbine de compresseur (13) pouvant être commuté par une position correspondante du clapet antiretour (15a, 15b, 15c).

3. Dispositif de suralimentation selon la revendication 2, **caractérisé en ce que** le clapet antiretour (15b) dans la branche d'air frais (11b) et le clapet antiretour (15c) dans la conduite d'alimentation en air frais (7) sont remplacés par une soupape de commutation (16) au point de raccordement à une une branche d'air frais (11c).

4. Dispositif de suralimentation selon la revendication 2, **caractérisé en ce que** le clapet antiretour (15b) dans la branche d'air frais (11b) et le clapet antiretour (15a) dans la branche d'air de suralimentation (11a) sont remplacés par une soupape de commutation (16a) au point de branchement (11e) de la conduite de branchement (11).

5. Dispositif de suralimentation selon l'une quelconque des revendications 2 à 4, **caractérisé en ce qu'**un refroidisseur d'air de suralimentation (17) est prévu dans la conduite d'alimentation en air de suralimentation (8), le point de raccordement à une branche d'air de suralimentation (11d) de la branche d'air de suralimentation (11a) étant disposé dans un débit massique d'air frais (24) en aval du refroidisseur d'air de suralimentation (17) au niveau de la conduite d'alimentation en air de suralimentation (8).

6. Dispositif de suralimentation selon l'une quelconque des revendications 2 à 4, **caractérisé en ce qu'**un refroidisseur d'air de suralimentation (17) est prévu dans la conduite d'alimentation en air de suralimentation (8), le point de raccordement à une branche d'air de suralimentation (11d) de la branche d'air de suralimentation (11a) étant disposé dans un débit massique d'air frais (24) en amont du refroidisseur d'air de suralimentation (17) au niveau de la conduite d'alimentation en air de suralimentation (8).

7. Dispositif de suralimentation selon l'une quelconque des revendications 1 à 6, **caractérisé en ce que** la turbine de compresseur (13) du chargeur à récupération (12) est munie d'un agencement d'aube directrice fixe ou variable dans le boîtier de turbine de compresseur pour optimiser le comportement d'écoulement ou le comportement d'afflux du débit massique d'air frais (24) ou du débit massique d'air de suralimentation (24).

8. Dispositif de suralimentation selon l'une quelconque des revendications 1 à 7, **caractérisé en ce que** la conduite d'alimentation en air frais (7) est raccordée par le biais d'une première tubulure d'admission (7a) et le côté basse pression (ND) de la turbine de compresseur (13) est raccordé par le biais d'une tubulure d'admission supplémentaire (7b) à un caisson de filtre d'air frais (18) .

9. Procédé de fonctionnement pour un dispositif de suralimentation d'un moteur à combustion interne selon l'une quelconque des revendications 1 à 8, **caractérisé en ce que** le dispositif de suralimentation, pendant le fonctionnement, en fonction du comportement de fonctionnement du moteur à combustion interne et à l'aide de l'agencement de soupape et du moteur-générateur (14) du chargeur à récupération (12), peut être commuté entre un mode de fonctionnement standard ou un mode de fonctionnement amplifié ou un mode de fonctionnement à récupération.

10. Procédé de fonctionnement pour un dispositif de suralimentation d'un moteur à combustion interne selon l'une quelconque des revendications 2 à 8 et selon la revendication 9, **caractérisé en ce que** l'agencement de soupapes présente des clapets antiretour (15a, 15b, 15c) et/ou une soupape de commutation (16, 17),
- pour mettre en oeuvre le mode de fonctionnement standard, la conduite d'alimentation en air frais (7) dans le débit massique d'air frais (24) dans la direction en amont du point de raccordement à une branche d'air frais (11c) et la branche d'air frais (11b) étant ouvertes, et la branche d'air de suralimentation (11a) étant fermée, et le moteur-générateur (14) étant commuté sur neutre,
- pour mettre en oeuvre le mode de fonctionnement amplifié, la conduite d'alimentation en air frais (7) dans le débit massique d'air frais (24) dans la direction en aval du point de raccordement à une branche d'air frais (11c) et la branche d'air de suralimentation étant fermées, et la branche d'air frais (11b) étant ouverte, et le moteur-générateur (14) étant commuté en mode moteur, en entraînant la turbine de compresseur (13), pour augmenter la pression dans la conduite d'alimentation en air frais (8) et
- pour mettre en oeuvre le mode de fonctionnement à récupération, la conduite d'alimentation en air frais (7) dans le débit massique d'air frais (24) dans la direction en amont du point de raccordement à une branche d'air frais (11c) et la branche d'air de suralimentation étant ouvertes et la branche d'air frais étant fermée, et le moteur-générateur (14) étant commuté en mode générateur, entraîné par la turbine de compresseur (13) pour récupérer l'énergie.
